# EUROPEAN PATENT APPLICATION

(11) **EP 3 886 421 A1**
(43) Date of publication of application: **29.09.2021**
(21) Application number: 19888141.9
(22) Date of filing: 10.09.2019
(51) Int. Cl.: H04N 5/225, H04N 5/232, G06F 1/16, G03B 17/56

(54) **WEARABLE DEVICE**

(30) Priority: 23.11.2018 CN 201811409899
(71) Applicant: Anhui Huami Information Technology Co., Ltd., Hefei, Anhui 230088 (CN)
(72) Inventor: HOU, Shien Chang, Hefei, Anhui 230088 (CN); YANG, Jinguo, Hefei, Anhui 230088 (CN); SU, Jixiang, Hefei, Anhui 230088 (CN)
(74) Representative: Angerhausen, Christoph
(86) International application number: PCT/CN2019/105209
(87) International publication number: WO 2020/103541

(57) **Abstract**

A wearable device includes: a body (1), a driving assembly (2), and a camera assembly (3). The body (1) includes a working surface (11) and a side wall (12) connected to an edge of the working surface (11). The driving assembly (2) is connected to the body (1) and includes an adjusting component (21) and a supporting component (22) that protrude from the side wall (12). The adjusting component (21) and the supporting component (22) are rotatable relative to each other in a plane perpendicular to the working surface (11). The camera assembly (3) includes a lens (31) connected to the adjusting component (21) and an image sensor (32) connected to the supporting component (22). The relative rotation of the adjusting component (21) and the supporting component (22) drives the lens (31) to move linearly in a direction perpendicular to a photosensitive surface of the image sensor (32).

## Description

### CROSS-REFERENCE TO RELATED APPLICATION(S)

The present application is filed based on a Chinese patent application with the application number of 201811409899.7 and the filing date of November 23, 2018, and claims priority to the Chinese patent application. The entire content of the Chinese patent application is hereby incorporated into this application by reference.

### TECHNICAL FIELD

The present application relates to the technical field of electronic devices, and in particular to a wearable device.

### BACKGROUND

With the development of science and technology, wearable devices such as bracelets and watches have gradually entered the lives of the public. Moreover, in order to improve the convenience in use, wearable devices have a development trend of integrating more functions, and a camera function is one of them.

Wearable devices with a camera function are provided in the art, which can be specifically implemented by integrating a camera assembly. Generally, the camera assembly includes a fixed-position lens and an image sensor. During use, an image is collected through the lens, imaged on a photosensitive surface of the image sensor, and then displayed on a display screen of the wearable device after being processed by the image sensor.

The wearable device provided in the existing art cannot adjust the focal length when shooting, because the positions of the lens and the image sensor are fixed. This makes it impossible to give consideration to different shooting scenes. For example, when shooting a distant view or taking a self-portrait, the picture definition is insufficient due to the inability to adjust the focal length, which affects the use effect.

### SUMMARY

The present application provides a wearable device to solve the deficiencies in the related art. A wearable device is provided in an implementation of the present application, and the wearable device includes: a body, a driving assembly, and a camera assembly. The body includes a working surface and a side wall connected to an edge of the working surface. The driving assembly is connected to the body and includes an adjusting component and a supporting component that protrude from the side wall. The adjusting component and the supporting component are rotatable relative to each other in a plane perpendicular to the working surface. The camera assembly includes a lens connected to the adjusting component and an image sensor connected to the supporting component. The relative rotation of the adjusting component and the supporting component drives the lens to move linearly in a direction perpendicular to a photosensitive surface of the image sensor.

In some implementations of the present application, the camera assembly further includes a limiting component that connects the lens and the image sensor so as to limit the linear movement of the lens in the direction perpendicular to the photosensitive surface of the image sensor.

In some implementations of the present application, an axis of the relative rotation of the adjusting component and the supporting component is parallel to the photosensitive surface of the image sensor; the adjusting component includes a first baffle, the first baffle is formed with a guiding structure, and distances from various points on the guiding structure to the axis change continuously; and the camera assembly further includes a guide member, one end of the guide member fits the guiding structure, and the other end is fixedly connected to the lens.

In some implementations of the present application, the adjusting component further includes: a annular side wall and a second baffle; the annular side wall is connected to the first baffle to form a cavity, and the cavity is provided over the supporting component in a sleeved manner to accommodate the camera assembly; and the second baffle is connected to one side of the annular side wall located on the first baffle away from the body.

In some implementations of the present application, the annular side wall includes a transparent part, and the lens is arranged corresponding to the transparent part.

In some implementations of the present application, the supporting component includes a supporting surface corresponding to the annular side wall, and the supporting surface bears the image sensor.

In some implementations of the present application, the supporting component is rotatably connected to the body.

In some implementations of the present application, a locking mechanism is provided between the supporting component and the body.

In some implementations of the present application, the supporting component and the body as well as the supporting component and the adjusting component are in a damping connection.

In some implementations of the present application, a damping effect between the supporting component and the body is greater than a damping effect between the supporting component and the adjusting component.

In some implementations of the present application, the adjusting component is fixedly connected to the body; and a rotation axis of the supporting component relative to the body coincides with an axis of the relative rotation of the adjusting component and the supporting component.

In some implementations of the present application, the driving assembly further includes a linkage component arranged between the adjusting component and the supporting component; and the linkage component can keep the adjusting component and the supporting component in a relatively fixed state or a relatively rotating state.

In some implementations of the present application, the linkage component includes a ratchet, and the ratchet limits the adjusting component to rotate relative to the supporting component in a single direction.

In some implementations of the present application, the body is formed with an inner cavity, and the driving assembly is telescopically mounted in the inner cavity.

The technical solution provided by the implementations of the present application may include the following beneficial effects.

The adjusting component and the supporting component cause the lens to be far away from or close to the image sensor in a direction perpendicular to the photosensitive surface of the image sensor, so that focal length adjustment can be performed for the camera assembly. For example, when a distant object is shoot, a distance between the lens and the image sensor is reduced; when a nearby object is shoot, the distance between the lens and the image sensor is increased, so that the lens can clearly image on the image sensor, and the quality of the image acquired by the wearable device can be optimized, thus overcoming the shortcomings of wearable devices provided by the existing art.

It should be understood that the above general description and the following detailed description are only illustrative and explanatory, and cannot limit the application.

### BRIEF DESCRIPTION OF DRAWINGS

The accompanying drawings here are incorporated into the specification and constitute a part of the specification, show implementations that conform to the present application, and are used together with the specification to explain the principle of the present application.
FIG. 1 to FIG. 4 are schematic diagrams showing structures of a wearable device according to different example implementations.
FIG. 1 is a three-dimensional schematic diagram showing a body, a driving assembly, and a camera assembly in a wearable device according to an example implementation.
FIG. 2 and FIG. 3 are schematic diagrams showing ends of a driving assembly and a camera assembly in a wearable device according to different example implementations.
FIG. 4 is a schematic diagram showing a driving assembly and a camera assembly in a wearable device according to an example implementation.
FIG. 5 to FIG. 7 are schematic diagrams showing different use states of a wearable device according to an example implementation.

Reference numerals in the accompanying drawings have the following meanings.
1. Body; 11. Working surface; 12. Side wall;
2. Driving assembly;
21. Adjusting component; 211. First baffle; 212. Annular side wall; 213. Second baffle; 214. Guiding structure; 215. Connecting component; 216. Cavity;
22. Supporting component; 221. Supporting surface;
3. Camera assembly; 31. Lens; 32. Image sensor; 33. Guide member;
4. Belt.

### DETAILED DESCRIPTION

Example implementations will be described in detail here, and examples thereof are shown in the accompanying drawings. When the following description refers to the accompanying drawings, unless otherwise indicated, the same numerals in different accompanying drawings indicate the same or similar elements. Implementations described in the following example implementations do not represent all implementations consistent with the present application. On the contrary, they are merely examples of devices and methods consistent with some aspects of the present application as detailed in the appended claims.

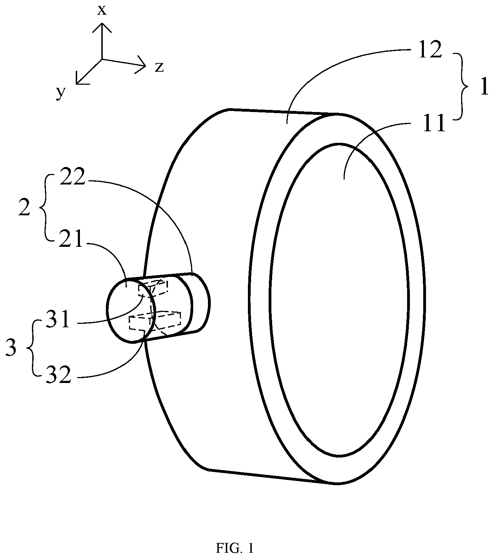

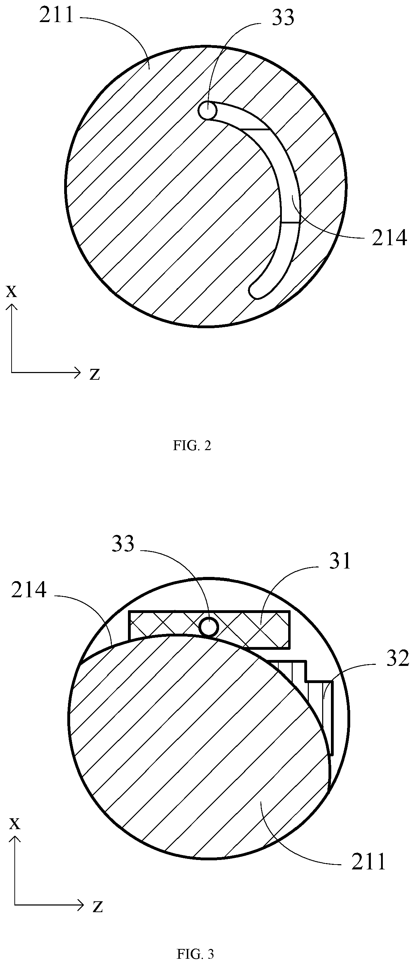

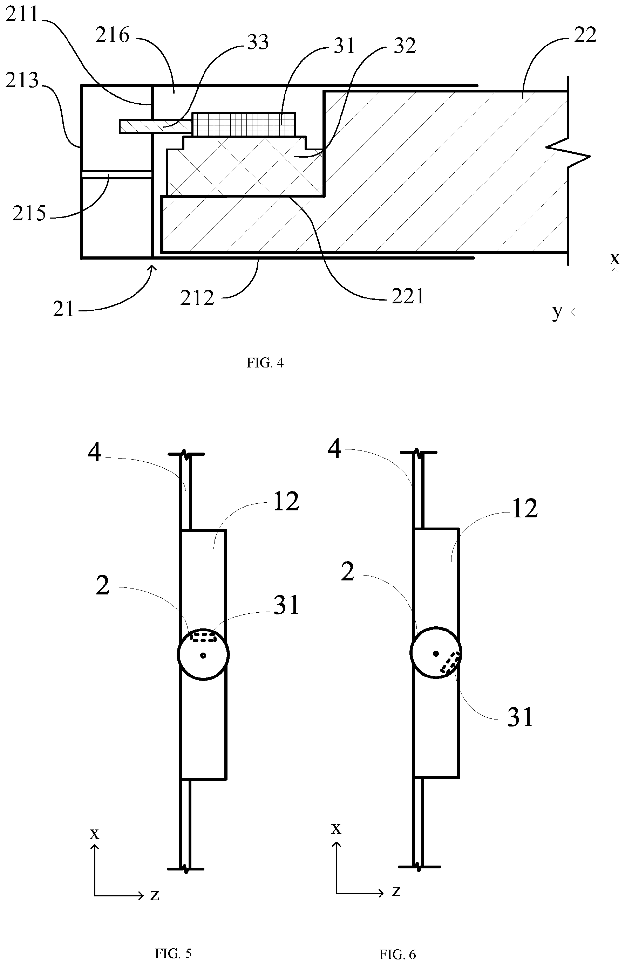

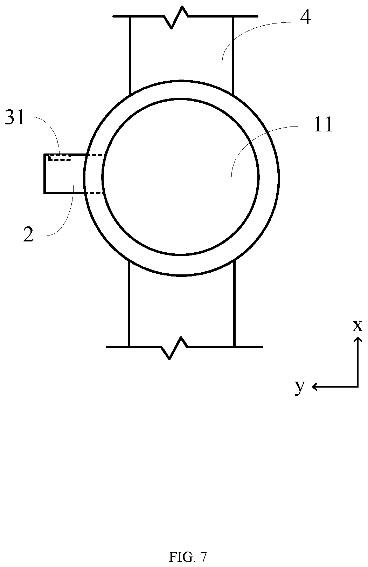

FIG. 1 to FIG. 4 are schematic diagrams of structures of a wearable device. FIG. 1 is a three-dimensional schematic diagram showing a body, a driving assembly, and a camera assembly in a wearable device according to an example implementation. FIG. 2 and FIG. 3 are schematic diagrams showing ends of a driving assembly and a camera assembly in a wearable device according to different example implementations. FIG. 4 is a schematic diagram showing a driving assembly and a camera assembly in a wearable device according to an example implementation. FIG. 5 to FIG. 7 are schematic diagrams showing different use states of a wearable device according to an example implementation.

In the implementations of the present disclosure, the wearable device may be a bracelet, a watch, etc., or other wearable devices. Taking a bracelet and a watch as an example, referring to FIG. 1 to FIG. 7, the wearable device includes: body 1, driving assembly 2, camera assembly 3, and belt 4.

Body 1 includes working surface 11 and side wall 12 connected to an edge of working surface 11. Regarding the implementation of side wall 12, in some implementations of the present application, body 1 includes a first housing for mounting working surface 11, and the first housing includes a back plate (not shown in the drawing) and side wall 12 extending from an edge of the back plate. When working surface 11 is assembled on the first housing, working surface 11 is connected to a part of side wall 12 away from the back plate and is arranged opposite to the back plate. At this moment, the first housing and working surface 11 enclose an internal cavity, which is configured to accommodate a processing chip, a sensor, and other assemblies to realize functions of the wearable device such as calling, taking pictures, timing, and monitoring vital sign parameters. Further, working surface 11 includes a display screen configured to display readable information, such as vital sign parameters monitored by the wearable device or an image acquired by camera assembly 3. In addition, the first housing of body 1 is connected to belt 4, and a user wears the device using belt 4 during use.

Driving assembly 2 is connected to body 1 and includes adjusting component 21 and supporting component 22 that protrude from side wall 12. Adjusting component 21 and supporting component 22 can rotate relative to each other in a plane perpendicular to working surface 11. Adjusting component 21 and supporting component 22 are arranged protruding from side wall 12, so that a user can control the relative rotation of the two for performing corresponding operations. The relative rotation of adjusting component 21 and supporting component 22 will not shield the contents displayed on the working surface 11.

Camera assembly 3 includes lens 31 and image sensor 32. Lens 31 is connected to adjusting component 21, and image sensor 32 is connected to supporting component 22. The relative rotation of adjusting component 21 and supporting component 22 drives lens 31 to move linearly in a direction perpendicular to the photosensitive surface of image sensor 32.

Adjusting component 21 and supporting component 22 cause lens 31 to be far away from or close to image sensor 32 in the direction perpendicular to the photosensitive surface of image sensor 32, so that focal lens adjustment can be performed for camera assembly 3. For example, when a distant object is shoot, a distance between lens 31 and image sensor 32 is reduced; when a nearby object is shoot, the distance between lens 31 and image sensor 32 is increased, so that lens 31 can clearly image on image sensor 32, and the quality of the image acquired by the wearable device can be optimized, thus overcoming the shortcomings of wearable devices provided by the existing art.

In addition, it can be understood in combination with the above description that driving assembly 2 is arranged protruding from side wall 12, which on one hand facilitates framing and shooting of lens 31 connected to supporting component 22, and on the other hand facilitates implementation of a focal lens adjustment operation through the relative rotation of adjusting component 21 and supporting component 22.

In one implementation, camera assembly 3 further includes a limiting component that connect lens 31 and image sensor 32, so as to limit lens 31 to be always perpendicular to the photosensitive surface of image sensor 32, so that the imaging of lens 31 can fall on the photosensitive surface of image sensor 32.

Regarding the implementation of the limiting component, in some implementations of the present application, the limiting component is a second housing extending from an edge of image sensor 32 toward lens 31, lens 31 is placed in the second housing, and the second housing is arranged perpendicular to the photosensitive surface of image sensor 32. In this way, lens 31 can only move linearly in the direction perpendicular to the photosensitive surface of image sensor 32. In addition, a distance from an inner wall of the second housing to a side of lens 31 needs to satisfy that lens 31 cannot rotate in the second housing, and therefore, the imaging of lens 31 can always fall on the photosensitive surface of image sensor 32. In addition, a through groove is arranged on the second housing, and the through groove communicates the inside and outside of the second housing. In this case, a connecting assembly penetrating the through hole can be used to connect lens 31 and adjusting component 21, and then lens 31 move linearly in the direction perpendicular to the photosensitive surface of image sensor 32 under the action of the relative rotation of adjusting component 21 and supporting component 22.

In one implementation, driving assembly 2 is telescopically mounted in an inner cavity of body 1. For example, an elastic component is provided in the inner cavity of body 1 and a limiting component is provided on driving assembly 2. Through the cooperation of the elastic component and the limiting component, driving assembly 2 can be ejected from the inner cavity, and its end portion protrudes from an outer surface of side wall 12. Alternatively, driving assembly 2 is limited in the inner cavity, and its end portion is located in body 1 or aligned to the outer surface of side wall 12. The specific implementation forms of the elastic component and the limiting component can refer to a pressing and rebounding mechanism of a ballpoint pen. The specific implementations of the elastic component and the limiting component are well defined in the art and are not specifically limited in the present application. For details, reference can be made to US3288115 and US3120837.

In this case, when camera assembly 3 needs to be used, driving assembly 2 can be made to protrude from side wall 12. When camera assembly 3 is not needed, driving assembly 2 can be retracted into body 1 for protecting camera assembly 3 and avoiding wear and other factors from affecting the service lives of driving assembly 2 and camera assembly 3.

Regarding the implementation of driving assembly 2 driving camera assembly 3 to adjust the focal length, in one implementation, as shown in FIG. 2, an axis of the relative rotation of adjusting component 21 and supporting component 22 is parallel to the photosensitive surface of image sensor 32. In addition, adjusting component 21 includes first baffle 211. Guiding structure 214 is formed on first baffle 211, and distances from various points on guiding structure 214 to the axis of the relative rotation of adjusting component 21 and supporting component 22 change continuously. It should be noted that a variation range of the distances from guiding structure 214 to the axis of the relative rotation of adjusting component 21 and supporting component 22 can meet the requirements of focal lens adjustment of camera assembly 3 in normal use, so that camera assembly 3 can acquire a clear image in a variety of application scenarios.

Regarding the implementation of guiding structure 214, for an example and as shown in FIG. 2, guiding structure 214 is a guiding groove hollowed out on first baffle 211. The shape of the guiding groove is not limited and may be, for example, a linear type, a curved type, and the like.

Alternatively, as shown in FIG. 3, a size of first baffle 211 is smaller than a cross-sectional size of annular side wall 212. At this moment, first baffle 211 has a cam-like structure, and an edge of first baffle 211 forms guiding structure 214. When first baffle 211 is connected to annular side wall 212, a part of the edge of first baffle 211 is attached to annular side wall 212 so that a gap is formed between first baffle 211 and annular side wall 212.

Alternatively, first baffle 211 includes two independent parts, and guiding structure 214 is formed by a gap formed by the two parts in a radial direction of annular side wall 212.

As can be understood by those skilled in the art, in addition to the hollowed guiding groove and cam-like structure, the guiding apparatus that realizes the above functions can also have other forms, such as a recessed but not hollowed guiding groove. The specific structure of guiding structure 214 is not limited in the present application, as long as the distances from various points on the apparatus or structure to the axis of the relative rotation of adjusting component 21 and supporting component 22 are variable. In addition, one or a plurality of first baffles 211 may be provided as required. When a plurality of first baffles 211 are provided, they can be optionally provided on both sides of lens 31 (the situation illustrated in FIG. 4).

As shown in FIG. 2 or FIG. 3, camera assembly 3 further includes guide member 33. One end of guide member 33 is fixedly connected to lens 31 and the other end fits guiding structure 214. For example, when guiding structure 214 is a guiding groove, guide member 33 is inserted into guiding structure 214. When first baffle 211 has a cam-like structure and guiding structure 214 is the edge of first baffle 211, guide member 33 is inserted between first baffle 211 and annular side wall 212 and is connected to the edge of first baffle 211.

Optionally, guide member 33 is a rigid cylinder. When adjusting component 21 and supporting component 22 rotate relative to each other, first baffle 211 rotates relative to supporting component 22. In addition, when a limiting component formed by the second housing as described above is provided between lens 31 and image sensor 32, guide member 33 penetrates the through groove on the second housing and fits guiding structure 214.

In this implementation, the principle of driving assembly 2 to adjust the focal length of camera assembly 3 is as follows:
since image sensor 32 and supporting component 22 are relatively fixed, using different distances from guiding structure 214 to the axis of the relative rotation and under the action of the limiting component, the circumferential movement of adjusting component 21 relative to supporting component 22 is converted, through guiding structure 214 and guide member 33, into a linear movement of lens 31 relative to image sensor 32, which in turn changes the distances from lens 31 to the photosensitive surface of image sensor 32. In addition, the distances from various points on guiding structure 214 to the axis change continuously, so that the distances from lens 31 to the photosensitive surface of image sensor 32 change continuously, and the focal length of camera assembly 3 is changed continuously.

In this implementation, camera assembly 3 in the wearable device is driven by a mechanical structure to adjust the focal length, which has the characteristics of a compact structure and easy implementation. In particular, compared with the use of an electric motor to drive focal lens adjustment, the present application has less occupied space, lower production cost, and a better promotion prospect.

Regarding the specific implementation of driving assembly 2, referring to FIG. 2 to FIG. 4, driving assembly 2 is cylindrical. Compared with a rectangular or triangular prism structure, cylindrical driving assembly 2 has better wear resistance and durability. In addition, optionally, a groove or a frosted surface may be formed on an exposed surface of adjusting component 21 or supporting component 22 to increase the friction force with the user's hand, and even a flat surface can be provided, which is convenient for control.

Of course, in addition to the cylindrical shape, the cross-section of driving assembly 2 may also be other shapes, as long as the cross-sectional size can achieve rotation between adjusting component 21 and supporting component 22 and between supporting component 22 and body 1. The cross-sectional shapes of adjusting component 21 and supporting component 22 may be the same or different. The manners achieved by those skilled in the art through these variations also fall within the protection scope of the present application.

In addition, adjusting component 21 is provided over supporting component 22 in a sleeved manner, and a center line of driving assembly 2 coincides with the axis of the relative rotation of adjusting component 21 and supporting component 22. At this moment, with reference to FIG. 1, a direction perpendicular to working surface 11 is a z-axis, a direction of the center line of driving assembly 2 is a y-axis, and a direction perpendicular to a plane where the z-axis and the y-axis are located is an x-axis. Adjusting component 21 and supporting component 22 rotate relative to each other in a plane where the x-axis and the z-axis are located. Moreover, in the implementation of the present application, the description is made in a manner that adjusting component 21 is sleeved outside supporting component 22.

As shown in FIG. 4, adjusting component 21 further includes annular side wall 212 and second baffle 213. First baffle 211 is connected to annular side wall 212 to form cavity 216, and cavity 216 is provided over supporting component 22 in a sleeved manner and accommodates camera assembly 3. First baffle 211 is fixedly connected to annular side wall 212 to form cavity 216 with a stable structure. Cavity 216 provides a stable working environment for camera assembly 3 to avoid influences of external factors. In addition, in order not to affect the normal image acquisition by lens 31, optionally, annular side wall 212 includes a transparent part, such as a transparent ring or a transparent curved sheet. During assembling, lens 31 is arranged corresponding to the transparent part.

Second baffle 213 is connected to one side of annular side wall 212 located on first baffle 211 away from body 1. Guiding structure 214, especially the guiding groove of the hollow structure is formed on first baffle 211, external impurities may enter cavity 216 through guiding structure 214 and affect the normal use of camera assembly 3. Therefore, second baffle 213 is used to block cavity 216 to prevent dust, liquid, and the like from entering cavity 216.

It should be noted that when second baffle 213 is arranged, optionally, guiding structure 214 may be a closed curved groove. At this moment, guiding structure 214 divides first baffle 211 into two independent parts. The part of first baffle 211 located in guiding structure 214 can be connected to second baffle 213 through connecting component 215 to ensure structural stability.

Supporting component 22 includes supporting surface 221 located in cavity 216 and arranged corresponding to annular side wall 212. Supporting surface 221 bears image sensor 32 and keeps image sensor 32 corresponding to annular side wall 212. By providing supporting surface 221, a contact area between supporting component 22 and image sensor 32 is increased, and image sensor 32 can be stably fixed.

Regarding the implementation of the relative rotation of adjusting component 21 and supporting component 22, in one implementation, supporting component 22 is fixedly connected to body 1, and the relative rotation of the two is achieved by rotating adjusting component 21.

In another implementation, supporting component 22 is rotatably connected to body 1. As shown in FIG. 5 to FIG. 7, since supporting component 22 bears camera assembly 3, camera assembly 3 can be driven to rotate by the rotation of supporting component 22 relative to body 1 to change the framing direction of camera assembly 3, and adjusting component 21 is then used to adjust the focal length. For example, when the user wears the device, supporting component 22 is rotated outward so that lens 31 faces outward for long-range perspective shooting; and supporting component 22 is rotated inward so that lens 31 faces inward for taking a self-portrait.

Further, a locking mechanism, such as a pin and a pin hole, is provided between supporting component 22 and body 1 to lock supporting component 22 and body 1, thus avoiding unstable positioning of supporting component 22 and body 1 and a change in the framing direction of lens 31 that has been adjusted in place when rotating adjusting component 211 for focal lens adjustment.

In this implementation, as an optional manner, adjusting component 21 is fixedly connected to body 1.

For example, annular side wall 212 of adjusting component 21 extends to side wall 12 and is fixedly connected to body 11. In addition, a through groove is provided on annular side wall 212 to expose a part of supporting component 22 so that the user can directly act on supporting component 22. Alternatively, adjusting component 21 is fixedly connected to body 1 by using another connecting component.

In addition, the rotation axis of supporting component 22 relative to body 1 coincides with the axis of the relative rotation of supporting component 22 and adjusting component 21. At this moment, rotating supporting component 22 can simultaneously adjust the framing direction of lens 31 and the distance to the photosensitive surface of image sensor 32. In some implementations of the present application, the mounting position of first baffle 211 can be adjusted during assembling, so that the position of guiding structure 214 meets the following: when the user rotates supporting component 22 outward and uses lens 31 for long-range perspective shooting, the distance from lens 31 to the photosensitive surface of image sensor 32 is reduced; when the user rotates supporting component 22 inward and uses lens 31 to take a close shot, the distance from lens 31 to the photosensitive surface of image sensor 32 is increased. As can be seen, supporting component 22 rotates relative to adjusting component 21 and body 1 at the same time to adjust the direction of lens 31 and the focal length of camera assembly 3 simultaneously, which improves the convenience in use and optimizes the user experience.

As another alternative, supporting component 22 is rotatably connected to body 1 and adjusting component 21.

In this case, optionally, supporting component 22 and body 1 as well as supporting component 22 and adjusting component 21 are in a damping connection. In addition, the damping effect between supporting component 22 and body 1 is greater than the damping effect between supporting component 22 and adjusting component 21. The damping effect between supporting component 22 and body 1 is large, which increases the driving force of supporting component 22 rotating relative to body 1, which helps avoid changing the framing direction of lens 31 due to a misoperation and the like. In addition, different damping effects also have a prompting effect, which helps the user to identify the objects being currently rotated relatively to avoid wrong debugging.

Further, optionally, driving assembly 2 further includes a linkage component arranged between adjusting component 21 and supporting component 22. The linkage component is used to selectively keep adjusting component 21 and supporting component 22 relatively fixed, so adjusting component 21 is in two states: fixed relative to supporting component 22 or rotatable relative to supporting component 22. In such case, the framing direction of lens 31 and the focal length of camera assembly 3 can be adjusted separately.

For example, the linkage component is a one-way linkage component such as a ratchet. Optionally, the ratchet is provided between annular side wall 212 of adjusting component 21 and supporting component 22. Adjusting component 21 can only rotate relative to supporting component 22 in a single direction through the ratchet. Taking adjusting component 21 being able to rotate in a clockwise direction relative to supporting component 22 as an example, when the direction of lens 31 is adjusted, adjusting component 21 is rotated in a counterclockwise direction, and at this moment, adjusting component 21 and supporting component 22 rotate synchronously relative to body 1. When the focal length of camera assembly 3 is adjusted, adjusting component 21 is rotated in a clockwise direction.

It should be noted that when a one-way linkage component such as a ratchet is used, since adjusting component 21 can only rotate relative to supporting component 22 in a single direction, it is possible that the focal length of camera assembly 3 cannot be adjusted back. In order to avoid this situation, in this example, guiding structure 214 is selected as a closed guiding groove, such as a closed curved groove, and guiding structure 214 needs to meet the following: distances from various points on guiding structure 214 to the axis of the relative rotation of adjusting component 21 and supporting component 22 should be shortened first and then increased, or increased first and then shortened.

For example, the linkage component is a selection linkage component. For example, a first connecting component is arranged in annular side wall 212 of adjusting component 21, and a second connecting component and a third connecting component are arranged in an axial direction of supporting component 22. Both the second connecting component and the third connecting component can fit the first connecting component. During use, adjusting component 21 is moved in the axial direction to adjust the first connecting component to fit the second connecting component or the third connecting component. Optionally, when the first connecting component fits the second connecting component, adjusting component 21 and supporting component 22 are relatively fixed to adjust the direction of lens 31. When the first connecting component fits the third connecting component, adjusting component 21 and supporting component 22 rotate relative to each other to adjust the focal length of camera assembly 3. The types of the first, second, and third connecting components are not specifically limited, as long as the above selective connection function can be realized. Of course, it is also possible to provide a first connecting component on supporting component 22 and provide a second connecting component and a third connecting component on adjusting component 21.

After considering the specification and practicing the disclosure disclosed herein, those skilled in the art will easily think of other implementation solutions of the present application. The present application is intended to cover any variations, uses, or adaptive changes of the present application. These variations, uses, or adaptive changes follow the general principles of the present application and include common knowledge or customary technical means in the technical field that are not disclosed in the present application. The description and the implementations are only regarded as examples, and the true scope and spirit of the present application are pointed out by the following claims.

It should be understood that the present application is not limited to the precise structure described above and shown in the accompanying drawings, and various modifications and changes can be made without departing from its scope. The scope of the present application is only limited by the appended claims.

## Claims

1. A wearable device, comprising: a body, a driving assembly, and a camera assembly, wherein
the body comprises a working surface and a side wall connected to an edge of the working surface;
the driving assembly is connected to the body and comprises an adjusting component and a supporting component that protrude from the side wall, and the adjusting component and the supporting component can rotate relative to each other in a plane perpendicular to the working surface;
the camera assembly comprises a lens connected to the adjusting component and an image sensor connected to the supporting component; and
the relative rotation of the adjusting component and the supporting component drives the lens to have a linear movement in a direction perpendicular to a photosensitive surface of the image sensor.

2. The wearable device according to claim 1, wherein the camera assembly further comprises a limiting component that connects the lens and the image sensor so as to limit the linear movement of the lens in the direction perpendicular to the photosensitive surface of the image sensor.

3. The wearable device according to claim 1 or 2, wherein an axis of the relative rotation of the adjusting component and the supporting component is parallel to the photosensitive surface of the image sensor;
the adjusting component comprises a first baffle, a guiding structure is formed on the first baffle, and distances from various points on the guiding structure to the axis change continuously; and
the camera assembly further comprises a guide member, one end of the guide member fits the guiding structure, and the other end is fixedly connected to the lens.

4. The wearable device according to claim 3, wherein the adjusting component further comprises: an annular side wall and a second baffle;
the annular side wall is connected to the first baffle to form a cavity, and the cavity is provided over the supporting component in a sleeved manner to accommodate the camera assembly; and
the second baffle is connected to one side of the annular side wall located on the first baffle away from the body.

5. The wearable device according to claim 4, wherein the annular side wall comprises a transparent part, and the lens is arranged corresponding to the transparent part.

6. The wearable device according to claim 4, wherein the supporting component comprises a supporting surface corresponding to the annular side wall, and the supporting surface bears the image sensor.

7. The wearable device according to any one of claims 1-6, wherein the supporting component is rotatably connected to the body.

8. The wearable device according to claim 7, wherein a locking mechanism is arranged between the supporting component and the body.

9. The wearable device according to claim 7, wherein the supporting component and the body as well as the supporting component and the adjusting component are in a damping connection.

10. The wearable device according to claim 9, wherein a damping effect between the supporting component and the body is greater than a damping effect between the supporting component and the adjusting component.

11. The wearable device according to claim 7, wherein the adjusting component is fixedly connected to the body; and a rotation axis of the supporting component relative to the body coincides with the axis of the relative rotation of the adjusting component and the supporting component.

12. The wearable device according to claim 7, wherein the driving assembly further comprises a linkage component arranged between the adjusting component and the supporting component; and the linkage component can keep the adjusting component and the supporting component in a relatively fixed state or a relatively rotating state.

13. The wearable device according to claim 12, wherein the linkage component comprises a ratchet, and the ratchet limits the adjusting component to rotate relative to the supporting component in a single direction.

14. The wearable device according to any one of claims 1-13, wherein the body is formed with an inner cavity, and the driving assembly is telescopically mounted in the inner cavity.
